Europäisches Patentamt

European Patent Office

Office européen des brevets

(11) Publication number: 0 137 205
A2

# EUROPEAN PATENT APPLICATION

(21) Application number: 84109502.9

(22) Date of filing: 09.08.84

(51) Int. Cl.⁴: C 08 G 18/34
C 08 G 18/08, C 08 G 73/10

(30) Priority: 12.08.83 JP 148665/83

(43) Date of publication of application:
17.04.85 Bulletin 85/16

(84) Designated Contracting States:
DE FR GB

(71) Applicant: Hitachi Chemical Co., Ltd.
1-1, Nishi-shinjuku 2-chome Shinjuku-ku
Tokyo 160(JP)

(72) Inventor: Kurimoto, Toshiya
9-6, Nakanarusawacho-4-chome
Hitachi-shi(JP)

(72) Inventor: Nishizawa, Hiroshi
659-4, Hidana
Nakagocho Kitaibaraki-shi(JP)

(72) Inventor: Mukoyama, Yoshiyuki
20-5, Nishinarusawacho-3-chome
Hitachi-shi(JP)

(74) Representative: Kraus, Walter, Dr. et al,
Patentanwälte Kraus, Weisert & Partner Irmgardstrasse
15
D-8000 München 71(DE)

(54) Process for producing particulate polymer.

(57) A particulate polymer can be produced by reacting a polyisocyanate with a polycarboxylic acid or anhydride thereof in the presence of a non-aqueous organic liquid, and thereby obtaining the particulate polymer dispersed in the non-aqueous organic liquid.

EP 0 137 205 A2

PROCESS FOR PRODUCING PARTICULATE POLYMER

BACKGROUND OF THE INVENTION

This invention relates to a process for producing a particulate polymer, and more particularly to a process for producing a particulate polymer which is excellent in heat resistance and usable mainly as sheet, molded article, adhesive, coating material, composite material and the like.

There is known a technique for producing a solution of polymer having imide groups, such as polyamide-imide solution, polyimide solution and the like, by reacting a polyisocyanate with a polycarboxylic acid having acid anhydride group in the state of a solution in expensive solvent such as N-methylpyrrolidone, dimethylformamide, demethylacetamide or the like. However, in order to obtain a solid polymer from such a polymer solution, the solvent must be removed or recovered by a quite ineconomical process, so that production of polymer on an industrial scale by such a process has a serious problem in point of cost. One of the useful processes for producing solid polymers is bulk polymerization process requiring no solvent. However, polymers having imide groups generally have a rigid and highly polar molecular structure and are characterized by having a high glass transition temperature. Therefore, in applying bulk polymerization process to their production, the reaction must be effected, in general, under severe conditions of high temperatures and high pressures, so that it is difficult to control the reaction and to suppress side reactions. Thus, no success in the practical application has ever been reported.

Among polyamide resins, aromatic polyamides are known to be very good in heat resistance, but in general, the reactivity of aromatic dicarboxylic acids with aromatic diamine is not sufficient. In order to obtain a polymer having a high molecular weight such as 6,6-nylon or 6-nylon, there is employed a polymerization reaction of an aromatic diamine with an aromatic dicarboxylic acid dichloride which is more reactive than free carboxylic acids. However, in the reaction of an aromatic diamine with an aromatic dicarboxylic acid dianhydride, hydrochloric acid is secondarily produced, causes side reactions such as production of undersirable amine hydrochloride, and hence must be removed, and therefore, production of polymer on an industrial scale by such a polymerization reaction still have problems.

In order to solve such problems, there is proposed a process for producing a particulate polymer dispersed in non-aqueous liquid as shown in U.S. Patent No. 4,427,822. But according to this process, in order to obtain a polymer having a high molecular weight by catalytic reaction between terminal groups during the polymerization reaction, a second non-aqueous organic liquid is used as a solvent. Thus, it becomes necessary to completely remove the second non-aqueous organic liquid, when the resulting particulate polymer is to be applied to production of, for example, molded articles and composite materials wherein the presence of volatile component is not preferable. In such a case, a complicated process becomes necessary to remove the solvent. Further, the second non-aqueous organic liquid disclosed in U.S. Patent No. 4,427,822 includes N-methylpyrrolidone, N,N-dimethylformamide, or the like. But since these solvents easily bring about undesirable crosslinking reaction with an isocyanate group so as to prevent for attaining sufficient high molecular weight, there arises another problem when a substantially straight-chain high polymer soluble in a solvent is desired [see J. Polymer Sci. Part A-1 8, 683 (1970); J. Org. Chem. 38 (15), 2614 (1973); J. Org. Chem. 25 (12), 2245 (1960)].

SUMMARY OF THE INVENTION

The present inventors conducted repeated studies on an inexpensive process for producing a particulate polymer excellent in heat resistance which process is free from the defects described above. As a result, a process for producing a particulate polymer dispersed in a non-aqueous organic liquid was accomplished. That is to say, this invention relates to a process for producing a particulate polymer which comprises reacting a polyisocyanate (I) with a polycarboxylic acid having at least one acid anhydride group (II) and/or a polycarboxylic acid (III) in the presence of a non-aqueous organic liquid in which the resulting particulate polymer is insoluble and a dispersion stabilizer soluble in the non-aqueous organic liquid, and thereby obtaining the particulate polymer dispersed in the non-aqueous organic liquid.

DESCRIPTION OF THE PREFERRED EMBODIMENTS

According to the production process of this invention, the particulate polymer is obtained in the form of a dispersion of relatively small particles in the non-aqueous organic liquid and hence can easily be recovered from the dispersion by a procedure of filtration. Further, in particular, it is possible in the production process of this invention to use, as the non-aqueous organic liquid, an inexpensive general-purpose solvent in which the resulting particulate polymer is insoluble. Unlike the solution polymerization process wherein the increase of the content of solid component is restricted by the insolubility of polymer in solvent, this invention makes it possible to obtain so high a solid content in non-aqueous organic liquid as 50% by weight or more.

In this invention, the conversion from the monomers to the particulate polymer can sufficiently be enhanced in the reaction temperature range of usual solution polymerization process, and the reaction can be completed under relatively mild conditions, so that no drop in purity due to side reactions and the like is caused.

As the non-aqueous organic liquid used in this invention, there are used non-aqueous organic liquids in which the resulting particulate polymer is insoluble and which are inert, namely not inhibitory, to the polymerization reaction.

For example, there can be used aliphatic and alicyclic hydrocarbons such as n-hexane, octane, dodecane, ISOPAR-E, ISOPAR-H, ISOPAR-K, ISOPAR-L, ISOPAR-M (trade names of petroleum type saturated aliphatic and alicyclic hydrocarbons having boiling points ranging from about 40° to 300°C, manufactured by Esso Standard Oil Co.) and the like; aromatic hydrocarbons such as benzene, toluene, xylenes, NISSEKI HISOL-100, NISSEKI HISOL-150 (trade names of petroleum type aromatic hydrocarbons having boiling points ranging from about 80° to 300°C, manufactured by NIHON SEKIYU KAGAKU K.K.) and the like; etc. Among these liquids, those having a boiling point of 80°C or higher are preferred from the viewpoint of reaction temperature. When a solvent has a low boiling point, it can be used in the polymerization reaction under pressure. These liquids may be used alone or as a mixture thereof.

The dispersion stabilizer used in this invention is not critical, and any dispersion stabilizer may be used so long as it is soluble in the aforesaid non-aqueous organic liquid, it can form a stabilizing layer on the surface of the resulting particulate polymer, and it has a function of stabilizing the dispersion state of particles at least in the course of polymerization. As such a dispersion stabilizer, there can be used, for example, a resin which simultaneously has a first organic constituent having affinity to the polymer or the polymer-forming reactant solution (a solution formed from a polyisocyanate and a polycarboxylic acid having acid anhydride group and/or a polycarboxylic group) constituting the dispersed phase and a second organic constituent soluble in the non-aqueous organic liquid constituting the continuous phase.

As the first organic constituent having affinity to the dispersed phase, there can be used mainly aromatic type chain polymers linked together through intermediation of polar groups such as ether group, ester group, amide group, imide group or the like (for example, chain polyesters obtainable from terephthalic acid or isophthalic acid and dihydric alcohol, polyamides, polyamideimides, polyimides, polyetheramides, polyester-amides, polyester-amide-imides, polyester-imides and bisphenol type epoxy resins), as well as polymers and copolymers of vinyl monomers having polar group such as acrylonitrile, acrylamide, vinylpyrrolidone, vinylpyridine, vinyl-lactam and the like. As the second organic constituent soluble in the continuous phase (the non-aqueous organic liquid), mainly aliphatic type chain polymers having low polarity are used. For example, there can be used polymers and copolymers of butyl, hexyl, 2-ethylhexyl, octyl, lauryl or stearyl ester of acrylic or methacrylic acid; monoalkoxides of polyethylene oxide having a degree of polymerization of 3 to 100, its monomethacrylate (for example, polymer and copolymer of NK Ester M-9G and M-23G (trade names, manufactured by Shin-Nakamura Kagaku K.K.)); vinyl polymers such as polybutadiene, polyisoprene and the like; one end-blocked product of poly-(hydroxyfatty acid ester)s having a molecular weight of 1,000 or more, for example, self-condensate of 12-hydroxystearic acid of which one end is blocked with monobasic carboxylic acid or monohydric alcohol; polymers or copolymers of its glycidyl methacrylate adduct; degraded natural rubber; cellulose derivatives; and the like.

These first and second organic onstituents are obtained in the form of random polymer, block polymer or graft polymer in which both the constituents are mutually linked through chemical bonds.

As another example of usable dispersion stabilizer, there can be used a resin having one or more functional group(s) reactive with either one of isocyanate group, acid anhydride group and carboxyl group which are contained in the reactants (a polyisocyanate and a polycarboxylic acid having at least one acid anhydride group and/or a polycarboxylic acid; hereinafter meaning the same). As such functional groups, the followings can be exemplified. Functional groups reactive with the isocyanate group include, for example, a hydroxyl group, a carboxyl group, a methylol group, an amino group, an acid anhydride group, an epoxy group, etc. Preferably, the

- 8 -                    0137205

hydroxyl group or the epoxy group is used. Functional groups reactive with the acid anhydride group and the carboxyl group include, for example, an isocyanate group, a hydroxyl group, an amino group, an epoxy group, etc. Among them, the hydroxyl group or the epoxy group is preferred as the functional group. As the resin having such functional group, there are used, for example, alkoxy-modified amino resins such as butylated benzoguamine-formaldehyde resin, butylated melamine-formaldehyde resin and the like; telechelic rubber having an average molecular weight of about several thousands and having hydroxyl group, carboxyl group, acid anhydride group, epoxy group, isocyanate group, mercaptan group or the like; degradated natural rubber; etc. Further, as the dispersion stabilizer, there can also be used a product prepared by introducing a functional group into the aforesaid first organic constituent of random polymer, block polymer or graft polymer obtained by combining the above-mentioned first and second organic constituents through intermediation of chemical bond. In addition, there are also used a product prepared by introducing functional group into the aforesaid second organic constituent soluble in the continuous phase (the non-aqueous organic liquid), and the like. A method for introducing functional groups into these resins is as follows. When the dispersion stabilizer is a vinyl polymer, a functional group can be introduced by copolymerizing a vinyl monomer having the functional group. As vinyl monomer having one or

- 9 -

0137205

more hydroxyl groups, there can be used, for example, allyl alcohol, hydroxyethyl or hydroxypropyl ester of acrylic acid or methacrylic acid, acrylic ester or methacrylic ester of polyethylene oxide having a degree of polymerization of 3 to 100 or polypropylene oxide having a degree of polymerization of 3 to 100, etc. As vinyl monomer having one or more carboxyl groups, there can be used, for example, acrylic acid, methacrylic acid, itaconic acid, etc. As vinyl monomer having one or more acid anhydride groups, there can be used, for example, maleic anhydride, itaconic anhydride, etc. As vinyl monomer having one or more epoxy groups, there can be used, for example, glycidyl ester of acrylic acid or methacrylic acid, their arylglycidyl esters, etc. As vinyl monomer having one or more methylol groups, methylolacrylamide and the like can be used.

In the case of addition polymer or condensation polymer, functional groups can easily be introduced thereinto by leaving the functional group of the monomer for forming the polymer or the functional group formed by a reaction, at the end of the polymer. In the case of polyethylene oxide, polypropylene oxide and the like, a hydroxyl group can be left. In the case of polyester obtained from a polycarboxylic acid or its anhydride and a polyhydric alcohol, the carboxyl group, acid anhydride group or hydroxyl group can be left. In the case of polyamide, polyimide or polyamide-imide obtained from polycarboxylic acid or its acid anhydride and polyisocyanate or polyamine, the carboxyl group, acid anhydride group, isocyanate group, amino group or the like can be left.

As the dispersion stabilizer, random copolymers of lauryl methacrylate, stearyl methacrylate, lauryl acrylate or stearyl acrylate and 2-hydroxyethyl methacrylate, glycidyl methacrylate, 2-hydroxyethyl acrylate and/or glycidyl acrylate are preferred.

A process for producing the dispersion stabilizer is not critical, and it is produced, for example, by radical polymerization in a non-aqueous organic liquid.

The number average molecular weight of the dispersion stabilizer is preferably 6,000 or more.

From the viewpoint of stability and ease of handling, the number average molecular weight is more preferably in the range from 6,000 to 300,000.

The number average molecular weight is measured by gel permeation chromatography in reference to a calibration curve obtained for a polystyrene having a known molecular weight.

The number average molecular weight of the dispersion stabilizer is controlled by means of the reaction temperature and the amount of catalyst for the production, for example, in the case of radical polymerization.

When the above-mentioned functional group is let exist in dispersion stabilizer, the molar ratio for reaction of a second organic constituent (B) to a first organic constituent having functional group (A) ((B)/(A))

is preferably in the range from 1/1 to 5/1. When the molar ratio for reaction (B)/(A) exceeds 5/1, the dispersion stabilizer cannot be combined with the resulting particulate polymer, with the consequent result that no stabilizing layer can be formed on the surface of polymer particle of the particulate polymer, so that agglomeration takes place readily. When the molar ratio for reaction (B)/(A) is less than 1/1, the resulting particulate polymer can undergo an undesirable gelation.

As the polyisocyanate used in this invention, there can be used, for example, aromatic diisocyanates such as tolylene diisocyanate, xylylene diisocyanate, 4,4'-diphenylether diisocyanate, naphthalene-1,5-diisocyanate, 4,4'-diphenylmethane diisocyanate and the like; aliphatic diisocyanates such as ethylene diisocyanate, 1,4-tetramethylene diisocyanate, 1,6-hexamethylene diisocyanate, 1,12-dodecane diisocyanate and the like; alicyclic diisocyanates such as cyclobutene-1,3-diisocyanate, cyclohexane-1,3- and 1,4-diisocyanates, isophorone diisocyanate and the like; polyisocyanates such as triphenylmethane-4,4',4"-triisocyanate, a polyphenylmethyl polyisocyanate, e.g., phosgenated product of aniline-formaldehyde condensate, and the like; and isocyanurate ring-containing polyisocyanates produced by trimerizing these polyisocyanates. From the viewpoint of heat resistance, cost and the like, it is preferable to use aromatic polyisocyanates such as tolylene diisocyanate, 4,4'-diphenylmethane diisocyanate, 4,4'-diphenylether diisocyanate, triphenyl-4,4',4"-triisocyanate and the like, and isocyanate ring-containing polyisocyanates obtainable by the trimerization reaction of these aromatic diisocyanates. The process for producing isocyanurate ring-containing polyisocyanates is described in Japanese Patent Publication No. 34,209/81. The isocyanurate ring-containing polyisocyanates are used as branching component, and their isocyanurate ring skelton gives excellent heat resistance. For synthesizing a particulate polymer having imide groups which is substantially linear and thermoplastic, bifunctional polyisocyanates are used. For synthesizing a particulate polymer having imide groups which is branched and thermosetting, 3- or higher-functional polyisocyanates are used. These polyisocyanates are used either alone or as a mixture thereof depending on purposes. In order to control reaction rate in the course of polycondensation reaction and to obtain a stable particulate polymer, the polyisocyanates may be used also in a form partly or entirely stabilized with an appropriate blocking agent having one active hydrogen in the molecule, such as methanol, n-butanol, benzyl alcohol, ε-caprolactam, methyl ethyl ketone oxime, phenol, cresol or the like.

The polycarboxylic acid having at least one acid anhydride group includes, for example, tricarboxylic acid anhydrides such as trimellitic anhydride, 1,2,4-butanetricarboxylic acid 1,2-anhydride, 3,4,4'-benzophenonetricarboxylic acid 3,4-anhydride and the like;

di- and monoanhydrides of tetrabasic acids, e.g., aliphatic and alicyclic tetrabasic acids such as 1,2,3,4-butane-tetracarboxylic acid, cyclopentane-tetracarboxylic acid, ethylene-tetracarboxylic acid, bicyclo-[2,2,2]-octo-(7)-ene-2:3:5:6-tetracarboxylic acid and the like, aromatic tetracarboxylic acids such as pyromellitic acid, 3,3',4,4'-benzophenonetetracarboxylic acid, bis(3,4-dicarboxyphenyl) ether, 2,3,6,7-naphthalenetetracarboxylic acid, 1,2,5,6-naphthalenetetracarboxylic acid, ethylene glycol bistrimellitate, 2,2'-bis(3,4-biscarboxyphenyl)-propane, 2,2',3,3'- or 3,3',4,4'-biphenyltetracarboxylic acid, perylene-3,4,9,10-tetracarboxylic acid, bis-3,4-dicarboxyphenyl sulfone 2,2-bis[4-(2,3- or 3,4-dicarboxy-phenoxy)phenyl]-propane, 4-(2,3-dicarboxyphenoxy)-4'-(3,4-dicarboxyphenoxy)-diphenyl-2,2-propane and the like, and heterocyclic tetrabasic acids such as thiophene-2,3,4,5-tetracarboxylic acid, pyrazine-tetracarboxylic acid and the like.

From a polyisocyanate and a polycarboxylic acid having at least one acid anhydride group and free carboxyl group such as tricarboxylic anhydrides, there can be obtained a polyamide-imide. From a polyisocyanate and a polycarboxylic acid having at least one acid anhydride group which has only acid anhydride group(s) such as tetracarboxylic acid anhydrides, there can be obtained a polyimide. In general, from the viewpoint of heat resistance, cost and the like, trimellitic anhydride, 2,2-bis[4-(3,4-dicarboxyphenoxy)phenyl]-propane dianhydride, 3,3',4,4'-benzophenonetetracarboxylic acid dianhydride or pyromellitic dianhydride is preferred.

As the polycarboxylic acid, there can be used, for example, trimellitic acid, trimesic acid, tris(2-carboxyethyl) isocyanate, terephthalic acid, isophthalic acid, succinic acid, adipic acid, 2,5-, 2,6- or 3,6-dicarboxytoluene, 2,6-dicarboxynaphthalene, 3,3'- or 4,4'-dicarboxybiphenyl, bis(3- or 4-carboxyphenyl) ether, bis(3- or 4-carboxyphenyl)ketone, bis(3- or 4-carboxyphenyl)sulfone, bis(3- or 4-carboxyphenyl)methane, bis(3- or 4-carboxyphenyl)dimethylmethane, pyromellitic acid, tricarballylic acid, nitrilotriacetic acid, nitrilotripropionic acid, adipic acid, sebacic acid, dodecanedicarboxylic acid and the like. From the viewpoint of heat resistance and the like, isophthalic acid, terephthalic acid, trimesic acid, tris(2-carboxyethyl) isocyanurate or nitrilotriacetic acid is preferred.

The polyisocyanate and the polycarboxylic acid having at least one acid anhydride group and/or the polycarboxylic acid are used preferably in such amounts that equivalent ratio of total carboxyl groups in the polycarboxylic acid having at least one acid anhydride group and/or the polycarboxylic acid to total isocyanate groups in the polyisocyanate (total carboxyl groups/ total isocyanate groups) is within the range of 1.0 to 2.0. Here, one equivalent of acid anhydride group is regarded as one equivalent of carboxyl group. When the particulate polymer is required to have a sufficiently high molecular weight and sufficiently high heat resistance and flexibility, the equivalent ratio of carboxyl group to isocyanate group is controlled so as to become 1.0 to 1.15, more preferably so as to become substantially 1.0.

The ratio of the amount of the non-aqueous organic liquid constituting the continuous phase to the amount of the reactants constituting the dispersed phase is preferably in such a range that the proportion of the reactants is 10 to 80% by weight based on the summed amounts of the non-aqueous organic liquid and the reactants. The proportion of 40% by weight or more is particularly preferred from the viewpoint of efficiency of production and cost.

As to the ratio of the amount of dispersion stabilizer to the amount of reactants, the proportion of dispersion stabilizer is preferably 0.5% by weight or more based on the summed amounts of dispersion stabilizer and reactants. From the viewpoint of heat resistance, cost and the like, the ratio is particularly preferably in such a range that said proportion becomes 2 to 20%.

Although the dispersion stabilizer is usually produced in the form of a solution and used in the form of a solution, the used amount thereof is calculated from the weight of non-volatile component in the solution dried, for example, at 170°C for 2 hours.

Further, this invention makes it also possible to obtain a particulate gel polymer. In order to obtain a particulate gel polymer, it is sufficient that the reaction is carried out until gelation takes place, with a resin composition containing a cross-linking component having a functionality of 3 or higher in an amount enough to cause gelation. Among the above-mentioned polyisocyanates, as polyisocyanates usable as cross-linking component having a functionality of 3 or higher, there are used compounds obtainable by trimerizing diisocyanates, for example, trimers of aromatic diisocyanates such as tolylene diisocyanate, xylylene diisocyanate, 4,4'-diphenylether diisocyanate, naphthalene-1,5-diisocyanate, 4,4'-diphenylmethane diisocyanate, etc.; trimers of aliphatic diisocyanates such as ethylene diisocyanate, 1,4-tetramethylene diisocyanate, 1,6-hexamethylene diisocyanate, 1,12-dodecane diisocyanate, etc.; and trimers of alicyclic diisocyanates such as cyclobutene-1,3-diisocyanate, cyclohexane-1,3- and 1,4-diisocyanates, irophorone diisocyanate, etc.; as well as triisocyanate compounds, for example, triphenylmethane-4,4',4"-triisocyanate, polyphenylmethyl polyisocyanate, e.g., a product of reaction of phosgene with aniline-formaldehyde condensate and the like. These polyisocyanates usable as cross-linking component can be used as the whole or a part of the polyisocyanate component.

Among the above-mentioned polycarboxylic acids having at least one acid anhydride group and/or polycarboxylic acids, those usable as cross-linking component having a functionality of 3 or higher are trimellitic acid, trimesic acid, pyromellitic acid, tris(2-carboxyethyl) isocyanurate, tricarballylic acid, nitrilotriacetic acid, nitrilotripropionic acid, etc. In this invention, both or either of the polycarboxylic acid having at least one acid anhydride group and the polycarboxylic acid is reacted with the isocyanate. The polycarboxylic acids usable as cross-linking component can be used as the whole or a part of the polycarboxylic acid having at least one acid anhydride group and/or the polycarboxylic acid.

In addition to the above-mentioned process for producing a particulate gel polymer by using a cross-linking component, there is, for example, a process which comprises causing gelation by utilizing a side reaction. For example, when a reaction of a bifunctional polyisocyanate with a bifunctional polycarboxylic acid having at least one acid anhydride group and/or a bifunctional polycarboxylic acid in the equivalent ratio of substantially 1.0 is effected at a high temperature of 120°C or higher for a long time, a particulate gel polymer is produced by a side reaction.

The temperature of the reaction of polyisocyanate with polycarboxylic acid having at least one acid anhydride group and/or polycarboxylic acid is preferably 80° to 350°C.

The polymerization reaction is preferably effected in a substantially anhydrous state. Therefore, it is desirable to effect the raction in an inert atmosphere of nitrogen gas or the like.  It is natural that the particulate polymer obtained by the production process of this invention cannot be produced as a dispersion in water medium because the reactants, particularly polyisocyanate, changes rapidly into an inactive substance upon contact with water.  The reaction may be effected either by charging all the starting materials at once or by stepwise charging them in accordance with purposes while making the reaction proceed.

Examples of the stepwise charging method are as follows.  The reaction is effected by adding a finely pulverized acid component to a heterogeneous solution prepared by dispersing all the components other than the acid component into an non-aqueous organic liquid in the state of oil droplets.  It is also possible to effect the reaction by adding a polyisocyanate to a heterogeneous solution prepared by dispersing all the components other than polyisocyanate into a non-aqueous organic liquid in the state of oil droplets.  In order to maintain the dispersion stability of particulate polymer in the course of polymerization reaction and to make the particles small-sized, it is also possible to use a method which comprises stepwise charging the dispersion stabilizer.

The particulate polymer obtained by this invention may, if necessary, be stabilized either in the course of the reaction or after the reaction by adding and reacting an appropriate blocking agent having one active hydrogen in the molecule such as methanol, n-butanol,

benzyl alcohol, ε-caprolactam, methyl ethyl ketone oxime, acetoaldoxime, phenol, cresol or the like.

As the method of stirring during the reaction, there can be used a stirring method by means of emulsifying device (homomixer) which is accompanied by high speed shearing, a stirring method by means of propeller type agitator which is accompanied by neither mechanical cutting of particles nor their pulverization, or the like. The emulsifying device is used preferably in a region where conversion of the reactants to polymer is not too high. As a preferable method of stirring, there is a method which comprises making the particles small-sized by means of an emulsifying device in the early stage of the reaction, replacing the emulsifying device by a propeller type agitator when rate of polymerization has reached a value giving a good dispersion stability, and further making the reaction proceed. According to this method, there can be obtained a particulate polymer which has a relatively small particule size and is uniform in particle size. Depending on synthesis system, it is also possible to make the particles small-sized before the reaction by using an emulsifying device.

According to the production process of this invention, the particulate polymer is obtained in the form of dispersion in a non-aqueous organic liquid. Although the dispersion phase contains the dispersion stabilizer, reactants and the like in addition to the particulate polymer, they can be removed by purification.

In some cases, it is possible, depending on purposes, to recover particulate polymer which is dispersed in a non-aqueous organic liquid and is reacted to some extent by filtration, or the like, and to conduct the reaction again with heating in the absence of the solvent so as to carry out the removal by drying of the non-aqueous organic liquid and the polymerization reaction simultaneously.

The particulate polymer produced by this invention is obtained in the form of non-agglometrated particles having an average particle diameter of 0.05 to 2,000 μm or more. Preferable average particle diameter is 0.1 to 500 μm, and the most preferable particle diameter is 0.5 to 100 μm. Such a particulate polymer can be recovered from the dispersion by filtration or decantation, followed by drying under ordinary or reduced pressure.

If necessary, the particulate polymer obtained by this invention may be made into a composite material by incorporating thereinto one or more members selected from fluorine-contained resins, epoxy resins, amino resins, phenol-formaldehyde resins, isocyanurate ring-containing polyisocyanates and hydroxyl group-containing polyester resins obtained by using terephthalic acid and/or isophthalic acid as acid component. As the epoxy resins, bisphenol type of epoxy resins such as Epikote 828, 1001, 1004 and 1007 (Shell Chemical Co.) and the like, epoxidized novolac resins such as DEN 431 and 438 (trade names, mfd. by Dow Chemical Co.) and the like, triglycidyl isocyanurate, etc. are preferred.  As the amino resins, melamine-formaldehyde resin and its alkoxy-modified resins such as butoxybenzoguanamine-formaldehyde resin, hexamethoxymelamine resin and the like are preferred. As the phenol-formaldehyde resins, phenol-formaldehyde resin, alkylphenol-formaldehyde resin, melamine-modified phenol-formaldehyde resin composed mainly of these resins, benzoguanamine-modified phenol-formaldehyde resin, and the like are preferred.  As the isocyanurate ring-containing polyisocyanates, a trimer produced by reacting an aromatic diisocyanate (particularly tolylene diisocyanate) in the presence of a tertiary amine, an isocyanurate ring-contaiing polyisocyanate mixture containing said trimer, and so on are preferred.  As the hydroxyl group-containing polyester resins obtainable by using terephthalic acid and/or isophthalic acid as acid component, a polyester resin obtainable by using tris(2-hydroxyethyl) isocyanurate as branching component, a polyester-imide resin, a polyester-amide resin and the like are preferred.  The above-mentioned particulate polymers and their composite materials exhibit good heat resistance, mechanical properties and electrical properties, and are useful as heat-resistant coating material, heat-resistant sheet, heat-resistant adhesive, heat-resistant laminating material, heat-resistant sliding material, heat-resistant molded article, heat-resistant composite materials combined with glass fiber or carbon fiber, etc.

- 22 -

0137205

Particularly in the case of a fine grain system, a relatively stable disperse system can be obtained, and therefore it is also possible to use the dispersion as it is as disperse coating material.

Further, the particulate gel polymer is useful as thixotropic agent, heat-resistant filler, thickening agent for lubricating oil, adsorbent for inorganic elements, separating material for organic compounds, and the like.

This invention is further explained referring to Examples.


EXAMPLE 1

(1)  Synthesis of Dispersion Stabilizer

In a four-necked flask equipped with a thermometer, a stirrer and a bulb type reflux condenser were placed 152 g of ISOPAR-H (trade name of an aliphatic hydrocarbon manufactured by Esso Standard Oil Co.), 74.5 g of lauryl methacrylate and 10.2 g of 2-hydroxyethyl methacrylate, and heated to 120°C.  While bubbling therethrough nitrogen gas, a previously prepared mixture consisting of 74.5 g of lauryl methacrylate, 40.8 g of 2-hydroxyethyl methacrylate and 2 g of benzoyl peroxide paste (benzoyl peroxide content 50% by weight) was added dropwise with stirring over a period of 2 hours. Subsequently, 100 g of ISOPAR-H was added dropwise at 120°C over a period of 1 hour, and the resulting mixture was heated to 140°C and subjected to reaction at this temperature for 4 hours. When dried at 170°C for 2 hours, the dispersion stabilizer solution thus obtained gave 51% by weight of non-volatile component. Number average molecular weight of the dispersion stabilizer (measured by gel permeation chromatography in response to a calibration curve obtained for a polystyrene having a known molecular weight; hereinafter the same applies) was 45,000.

(2)    Synthesis of Particulate Polymer

While introducing nitrogen gas into a four-necked flask equipped with a thermometer, a stirrer and a bulb type reflux condenser, 75 g of 4,4'-diphenylmethane diisocyanate, 19 g of the dispersion stabilizer solution obtained in (1) and 150 g of ISPAR-H were introduced thereinto and heated to 90°C with stirring. In this state, the mixture of them became a homogeneous solution. Thereto was added 72 g of previously finely pulverized trimellitic anhydride, and the resulting mixture was subjected to reaction at 100°C for 1 hour, then at 140°C for 1 hour and then at 180°C for 4 hours. Thus a yellow particulate polymer dispersed in the continuous phase of ISOPAR-H was obtained. It was collected by filtration, purified with n-hexane and methanol, and then dried at 60°C for 5 hours under reduced pressure. Infrared absorption spectrum of this particulate polymer showed an absorption of imide bond at 1780 $cm^{-1}$ and absorptions of amide bond at 1650 $cm^{-1}$ and 1540 $cm^{-1}$. Main fraction

of this particulate polyamide-imide polymer had a particle diameter of about 10 to 30 μm.

Example 2

While introducing nitrogen gas into the same apparatus as used in Example 1(2), 59.3 g of trimellitic anhydride, 26 g of the dispersion stabilizer solution obtained in Example 1(1) and 150 g of liquid paraffin were introduced into the apparatus and heated to 180°C with powerful stirring. In this state, the mixture of them formed a continuous phase and a dispersed phase and became an emulsion. To the emulsion was added dropwise 75 g of liquid 4,4'-diphenylmethane diisocyanate over a period of 2 hours. Subsequently, the resulting mixture was subjected to reaction at said temperature for 6 hours. Thus, a yellow particulate polymer dispersed in liquid paraffin was obrained. It was collected by filtration, washed with n-hexane and methanol, and then dried at 60°C for 5 hours under reduced pressure. Infrared absorption spectrum of this particulate polymer showed an absorption of imide bond at 1780 $cm^{-1}$ and absorptions of amide bond at 1650 $cm^{-1}$ and 1540 $cm^{-1}$. Main fraction of this particulate polymer had a particle diameter of about 10 to 60 μm.

EXAMPLE 3

(1) Synthesis of Dispersion Stabilizer

In the same apparatus as used in Example 1(1) were placed 92.9 g of ISOPAR-H, 106.8 g of lauryl methacrylate and 6.1 g of 2-hydroxyethyl methacrylate, and heated to 80°C. While bubbling therethrough nitrogen gas, a previously prepared mixture consisting of 106.9 g of lauryl methacrylate, 24.5 g of 2-hydroxyethyl methacrylate and 1.2 g of benzoyl peroxide paste was added dropwise with stirring over a period of 2 hours. Subsequently, 92.8 g of ISOPAR-H was added dropwise at 80°C over a period of 1 hour, and the resulting mixture was maintained at 80°C for 1 hour, thereafter heated to 140°C, and subjected to reaction at this temperature for 4 hours. When dried at 170°C for 2 hours, the dispersion stabilizer solution thus obtained gave 47% by weight of non-volatile component. Number average molecular weight of the dispersion stabilizer was 290,000.

(2)  Synthesis of Particulate Polymer

While introducing nitrogen gas into the same apparatus as used in Example 1(2), 75 g of 4,4'-diphenylmethane diisocyanate, 81.8 g of pyromellitic dianhydride, 25 g of the dispersion stabilizer solution obtained in (1) and 150 g of ISOPAR-H were introduced thereinto and heated to 100°C with stirring. The mixture thus obtained was subjected to reaction at 100°C for 1 hour, then at 140°C for 1 hour, and then at 180°C for 4 hours. Thus, a brown particulate polymer dispersed in ISOPAR-H was obtained. It was collected by filtration, purified with n-hexane and methanol, and then dried at 60°C for 5 hours under reduced pressure. Infrared absorption spectrum of this particulate polymer showed an absorption of imide bond at 1780 cm$^{-1}$ but not absorptions of amide bond at 1650 cm$^{-1}$ and 1540 cm$^{-1}$. Main fraction of this particulate polyimide polymer had a particle diameter of about 5 to 50 μm.

EXAMPLE 4

(1)  Synthesis of Dispersion Stabilizer

In the same apparatus as used in Example 1(1) were placed 100 g of ISOPAR-H, 142.2 g of stearyl methacrylate and 12.2 g of 2-hydroxyethyl methacrylate, and heated to 100°C.  While bubbling therethrough nitrogen gas, a previously prepared mixture consisting of 85.7 g of ISOPAR-H, 142.2 g of stearyl methacrylate, 49.0 g of 2-hydroxyethyl methacrylate and 4.8 g of benzoyl peroxide paste was added dropwise with stirring over a period of 2 hours.  Subsequently, the resulting mixture was maintained at 100°C for 1 hour, thereafter heated to 140°C, and subjected to reaction at this temperature for 4 hours.  When dried at 170°C for 2 hours, the dispersion stabilizer solution thus obtained gave 51% by weight of non-volatile component.  Number average molecular weight of the dispersion stabilizer was 65,000.

(2)  Synthesis of Particulate Polymer

While introducing nitrogen gas into the same apparatus as used in Example 1(2), 74.4 g of 4,4'-diphenyl-ether diisocyanate, 19 g of the dispersion stabilizer solution obtained in (1) and 150 g of ISOPAR-H were introduced thereinto and heated to 90°C with stirring. Thereto was added 63.4 g of previously finely pulverized trimellitic anhydride, and the resulting mixture was subjected to reaction at 100°C for 1 hour, then at 140°C for 1 hour, and then at 180°C for 5 hours. Thus, a yellow particulate polymer dispersed in ISOPAR-H was obtained. It was collected by filtration, purified with n-hexane and methanol, and then dried at 60°C for 5 hours under reduced pressure. Infrared absorption spectrum of this particulate polymer showed an absorption of imide bond at 1780 $cm^{-1}$ and absorptions of amide bond at 1650 $cm^{-1}$ and 1540 $cm^{-1}$. Main fraction of this particulate polyamide-imide polymer had a particle diameter of about 10 to 30 μm.

EXAMPLE 5

(1) Synthesis of Dispersion Stabilizer

In the same apparatus as used in Example 1(1) were placed 100 g of ISOPAR-H, 142.2 g of stearyl methacrylate and 13.3 g of glycidyl methacrylate, and heated to 100°C. While bubbling therethrough nitrogen gas, a previously prepared mixture consisting of 85.7 g of ISOPAR-H, 142.2 g of stearyl methacrylate, 53.5 g of glycidyl methacrylate and 4.8 g of benzoyl peroxide paste was added dropwise with stirring over a period of 2 hours. Subsequently, the resulting mixture was maintained at 100°C for 1 hour, thereafter heated to 140°C, and subjected to reaction at this temperature for 4 hours. When dried at 170°C for 2 hours, the dispersion stabilizer solution thus obtained gave 55% by weight of non-volatile component. Number average molecular weight of the dispersion stabilizer was 18,000.

(2) Synthesis of Particulate Polymer

While introducing nitrogen gas into the same apparatus as used in Example 1(2), 75 g of 4,4'-diphenylmethane diisocyanate, 19 g of the dispersion stabilizer solution obtained in (1) (non-volatile content 55% by weight) and 150 g of ISOPAR-H were introduced thereinto, and heated to 90°C with stirring. Thereto was added 72 g of previously finely pulverized trimellitic anhydride, and the resulting mixture was subjected to reaction at 100°C for 1 hour, then at 140°C for 1 hour, and then at 180°C for 4 hours. Thus, a yellow particulate polymer dispersed in ISOPAR-H was obtained. It was collected by filtration, purified with n-hexane and methanol, and then dried at 60°C for 5 hours under reduced pressure. Infrared absorption spectrum of this particulate polymer showed an absorption of imide bond at 1780 $cm^{-1}$ and absorptions of amide bond at 1650 $cm^{-1}$ and 1540 $cm^{-1}$. Main fraction of this particulate polymer had a particle diameter of about 20 to 60 μm.

EXAMPLE 6

(1)   Synthesis of Dispersion Stabilizer

In the same apparatus as in Example 1(1) were placed 152 g of ISOPAR-H, 83 g of lauryl methacrylate and 7.4 g of glycidyl methacrylate, and heated to 100°C. While bubbling therethrough nitrogen gas, a previously prepared mixture consisting of 83 g of lauryl methacrylate, 29.8 g of glycidyl methacrylate and 2.0 g of benzoyl peroxide paste was added dropwise with stirring over a period of 2 hours.  Subsequently, the resulting mixture was heated to 140°C and subjected to reaction at this temperature for 5 hours.  When dried at 170°C for 2 hours, the dispersion stabilizer solution thus obtained gave 42.2% by weight of non-volatile component.  Number average molecular weight of the dispersion stabilizer was 54,000.

(2)   Synthesis of Particulate Polymer

While introducing nitrogen gas into the same apparatus as used in Example 1(2), 75 g of 4,4'-diphenylmethane diisocyanate, 62.2 g of isophthalic acid, 19 g of the dispersion stabilizer solution obtained in (1) (non-volatile content 42.2% by weight) and 50 g of ISOPAR-H were introduced thereinto, and heated with stirring to be subjected to reaction at 100°C for 1 hour, then at 140°C for 1 hour, and then at 180°C for 4 hours. Thus, a whitish-yellow particulate polymer dispersed in ISOPAR-H was obtained.  It was collected by filtration, purified with n-hexane and methanol, and then dried at 60°C for 5 hours under reduced pressure. Infrared absorption spectrum of this particulate polymer did not show any absorption of imide bond at 1780 cm$^{-1}$, but showed absorptions of amide bond at 1650 cm$^{-1}$ and 1540 cm$^{-1}$. Main fraction of this particulate polyamide polymer had a particle diameter of 10 to 80 μm.

EXAMPLE 7

(1)  Synthesis of Dispersion Stabilizer

In the same apparatus as used in Example 1(1) was placed 1,114 g of ISOPAR-H, and heated to 120°C. While bubbling therethrough nitrogen gas, a previously prepared mixture consisting of 1,270 g of lauryl methacrylate, 104 g of 2-hydroxyethyl methacrylate, 113.6 g of glycidyl methacrylate and 70.3 g of benzoyl peroxide paste was added dropwise with stirring over a period of 2 hours. Subsequently, the resulting mixture was heated to 140°C and subjected to reaction at this temperature for 4 hours. When dried at 170°C for 2 hours, the dispersion stabilizer solution thus obtained gave 41% by weight of non-volatile component. Number average molecular weight of the dispersion stabilizer was 10,000.

(2)  Synthesis of Particulate Polymer

While introducing nitrogen gas into the same apparatus as used in Example 1(2), 50.8 g of MR-100 (trade name of a mixture comprising 4,4'-diphenylmethane diisocyanate, triphenylmethane-4,4',4"-triisocyanate and the like, isocyanate group content 31% by weight, manufactured by Nippon Polyurethane Co.), 19 g of the dispersion stabilizer solution obtained in (1), and 150 g of ISOPAR-H were introduced thereinto and heated to 100°C. Thereto was added 72 g of previously finely pulverized trimellitic anhydride, and the resulting mixture was subjected to reaction at 100°C for 1 hour, then at 140°C for 1 hour, and then at 180°C. Thus, a brown particulate polymer dispersed in ISOPAR-H was obtained. It was collected by filtration, purified with n-hexane and methanol, and then dried at 60°C for 5 hours under reduced pressure. Infrared absorption spectrum of this particulate polymer showed an absorption of imide bond at 1780 $cm^{-1}$ and absorptions of amide bond at 1650 $cm^{-1}$ and 1540 $cm^{-1}$. Main fraction of this particulate polyamide-imide polymer had a particle diameter of about 20 to 30 μm.

EXAMPLE 8

With 257.1 g of 4,4'-diphenylmethane diisocyanate was mixed 246.9 g of trimellitic anhydride, 514.3 g of ISOPAR-H and 68.6 g of the dispersion stabilizer solution obtained in Example 4(1), and the resulting mixture was subjected to reaction at 100°C for 1 hour with high-speed stirring by means of a homomixer. Thereafter, the mixture was transferred into the same apparatus as used in Example 1(2), and subjected to reaction at 140°C for 1 hour and then at 180°C for 4 hours. After completion of the reaction, the reaction product was purified with n-hexane and methanol and dried. Infrared absorption spectrum of the particulate polymer thus obtained showed an absorption of imide bond at 1780 $cm^{-1}$ and absorptions of amide bond at 1650 $cm^{-1}$ and 1540 $cm^{-1}$. Main fraction of this particulate polyamide-imide polymer had a particle diameter of about 0.5 to 2 μm.

EXAMPLE 9

In a 5-liter pressure vessel equipped with a temperature sensor, a nitrogen introducing pipe, a pressure control apparatus and a stirring apparatus, 1.2 kg of n-hexane, 600 g of 4,4'-diphenylmethane diisocyanate, 576 g of trimellitic anhydride and 25 g of the dispersion stabilizer solution synthesized in Example 4(1) were placed and the air in the flask was replaced by $N_2$, followed by stirring. Then, the nitrogen introducing pipe was closed, and the heating was conducted to conduct the reaction at 140°C for 1 hour while setting the pressure control apparatus at 6 $kg/cm^2$. Then, the pressure control apparatus was set at 9 $kg/cm^2$ and the reaction was continued at 160°C for 1 hour, followed by the reaction at 180°C for 2 hours under 13 $kg/cm^2$. As a result, light yellowish particulate polymer dispersed in n-hexane was obtained. The resulting polymer was recovered by filtration and air dried overnight. The particulate polymer had absorptions at 1780 $cm^{-1}$ due to imide bond, at 1650 $cm^{-1}$ and 1540 $cm^{-1}$ due to amide bond by 1R spectrum. Main fraction of this particulate polymer had a particle size of about 10 to 80 µm.

EXAMPLE 10

In the same apparatus as used in Example 1(2), 75 g of 4,4'-diphenylmethane diisocyanate, 57 g of trimellitic anhydride, 2.4 g of dispersion stabilizer solution obtained in Example 4(2), and 150 g of ISOPAR-H were placed while passing a nitrogen gas. The temperature of the flask was raised to 140°C with stirring, and the reaction was conducted at that temperature for 1 hour, at 160°C for 1 hour and at 180°C for 2 hours. Then the flask was cooled to room temperature. The resulting light yellowish particulate polymer was filtered, spreaded over a stainless steel vat, and placed in a hot-air drier. After drying at 160°C for 30 minutes, at 200°C for 1 hour, and at 210°C for 5 hours with hot air, there was obtained brown particulate polymer. The polymer immediately after drying was solid but not so hard that it was easily crushed by pushing with hand. The resulting particulate polymer had absorptions at 1780 $cm^{-1}$ due to imide bond and at 1650 $cm^{-1}$ and 1540 $cm^{-1}$ due to amide bond by IR spectrum. Main fraction of this particulate polymer had a particle size of about 10 to 80 µm. The particulate polymer had a reduced viscosity of 0.3 dl/g when measured by using N,N-dimethylformamide as solvent and under the conditions of 0.5 g/dl, 30°C.

COMPARATIVE EXAMPLE

In the same apparatus as used in Example 1(2), 75 g of 4,4'-diphenylmethane diisocyanate, 57 g of trimellitic anhydride, 2.4 g of dispersion stabilizer solution obtained in Example 4(2), 33 g. of N-methylpyrrolidone and 150 g of ISOPAR-H were placed while passing a nitrogen gass. The temperature of the flask was raised to 100°C and the reaction was conducted at 100°C for 1 hour, at 115°C for 1 hour, and then the temperature was raised to 125°C. When the reaction at 125°C was conducted over 3 hours, resulting polymer would become insoluble in a good solvent for the particulate polymer such as N-methylpyrrolidone and N,N-dimethylformamide due to undesirable cross-linking reaction. Therefore, the reaction at 125°C was conducted for 2.5 hours to give brown particulate polymer. Since the resulting particulate polymer contained N-methylpyrrolidone in the charged amount, the N-methylpyrrolidone was removed by using methanol. After refluxing 75 g of the particulate polymer and 225 g of methanol in a flask equipped with a reflux condenser for 1 hour on a hot water bath, the polymer was filtered and mixed with 225 g of methanol without drying to conduct reflux again. The reflux was repeated 3 times as a total. The filtered light yellowish particulate polymer containing no N-methylpyrrolidone was dried at 80°C for 5 hours under reduced pressure.

The content of N-methylpyrrolidone was determined by using Hitachi 164 TYPE Gas Chromatograph [column:

polyethylene glycol series strongly polar column (PEG 20M mfd. by Gasukuro Kogyo K.K); column length: 2 m; column temperature: 200°C; carrier gas: $N_2$; detector: FID] and diethylene glycol as inner standard substance. By conducting the reflux using methanol 3 times, the content of N-methylpyrrolidone became 1% by weight or less.

The resulting particulate polymer containing no N-methylpyrrolidone had absorptions at 1780 $cm^{-1}$ due to imide bond, at 1650 $cm^{-1}$ and 1540 $cm^{-1}$ due to amide bond by IR spectrum. Main fraction of this particulate polymer had a particle size of about 10 to 80 μm. The particulate polymer had a reduced viscosity of 0.2 dl/g when measured in the same manner as described in Example 10.

By using N-methylpyrrolidone, the crosslinking reaction takes place in the particulate polymer and the separation of remaining N-methylpyrrolidone from the particulate polymer is difficult. Therefore, considering the corsslinking reaction, the molecular weight of solvent-soluble particulate polymer should be very low.

WHAT IS CLAIMED IS:

1.      A process for producing a particulate polymer, which comprises reacting a polyisocyanate (I) with a polycarboxylic acid having at least one acid anhydride group (II) and/or a polycarboxylic acid (III) in the presence of a non-aqueous organic liquid in which the resulting particulate polymer is insoluble and the dispersion stabilizer soluble in the non-aqueous organic liquid, and thereby obtaining the particulate polymer dispersed in the non-aqueous organic liquid.

2.      A process for producing a particulate polymer according to Claim 1, wherein the dispersion stabilizer is a random copolymer of lauryl methacrylate, stearyl methacrylate, lauryl acrylate or stearyl acrylate and 2-hydroxyethyl methacrylate, glycidyl methacrylate, 2-hydroxyethyl acrylate and/or glycidyl acrylate.

3.      A process for producing a particulate polymer according to Claim 1, wherein the non-aqueous organic liquid is an aliphatic or alicyclic hydrocarbon.

4.      A process for producing a particulate polymer according to Claim 1, wherein the polyisocyanate (I) is 4,4'-diphenylmethane diisocyanate, 4,4'-diphenylether diisocyanate, tolylene diisocyanate, triphenylmethane-4,4',4"-triisocyanate or a polyisocyanate having at least one isocyanurate ring.

5.      A process for producing a particulate polymer according to Claim 1, wherein the polycarboxylic acid having at least one acid anhydride group (II) is trimellitic anhydride, pyromellitic dianhydride, 3,3',4,4'-benzophenonetetracarboxylic acid dianhydride or 2,2'-bis[4-(3,4-
dicarboxyphenoxy)phenyl]-propane dianhydride.

6.      A process for producing a particulate polymer
according to Claim 1, wherein the polycarboxylic acid is
isophthalic acid, terephthalic acid, trimesic acid,
tris(2-carboxyethyl) isocyanate or nitrilotriacetic acid.